(19) Europäisches Patentamt
European Patent Office
Office européen des brevets

(11) Numéro de publication: **0 100 252**
**B1**

(12) # FASCICULE DE BREVET EUROPEEN

(45) Date de publication du fascicule du brevet: **27.12.85**

(51) Int. Cl.⁴: **C 08 L 67/06**, C 08 F 283/00

(21) Numéro de dépôt: **83401291.6**

(22) Date de dépôt: **22.06.83**

(54) **Compositions durcissables à base de polyesters.**

(30) Priorité: **30.06.82 FR 8211449**

(43) Date de publication de la demande: **08.02.84 Bulletin 84/6**

(45) Mention de la délivrance du brevet: **27.12.85 Bulletin 85/52**

(84) Etats contractants désignés: **AT BE CH DE GB IT LI LU NL SE**

(56) Documents cités:
**EP - A - 0 070 755**
**GB - A - 914 426**

**CHEMICAL ABSTRACTS, vol. 80, no. 6, 11 février 1974, page 40, résumé no. 27978p, COLUMBUS, Ohio (US)**
**INTERNATIONAL POLYMER SCIENCE AND TECHNOLOGY, vol. 4, no. 1, 1977, SHREWSBURY (GB) Z. KLOSOWSKA-WOLKOWICZ et al.: "Unsaturated polyester resins modified with polyglycols", pages T39-T41**

(73) Titulaire: **CdF CHIMIE RESINES, Tour Aurore Place des Reflets, F-92080 Paris la Défense, Cedex 5 (FR)**

(72) Inventeur: **Meyer, Jacques, 141ter, rue de Saussure, F-75017 Paris (FR)**

(74) Mandataire: **Rieux, Michel et al, C d F Chimie S.A. Service Propriété Industrielle Tour Aurore Place des Reflets Cédex no. 5, F-92080 Paris la Defense 2 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 100 252 B1

BUNDESDRUCKEREI BERLIN

**Description**

La présente invention a pour objet des compositions à base de polyester et de monomère réticulat. Cette composition comprend:

a) un polyester insaturé
b) un monomère à insaturation éthylénique polymérisable
c) un oligoester de formule:

$$\left[ HO\overset{\overset{O}{\parallel}}{C}-CH=CH-\overset{\overset{O}{\parallel}}{C}-O \right]_x \!\!-\!\!\left(R-O\right)_{\overline{m}} R-(OH)_y \qquad (I)$$

dans laquelle la valeur moyenne de x est comprise entre 1,5 et 2, y est égal à 2–x, R qui peut varier d'un motif à l'autre représente un radical aliphatique linéaire ou ramifié ayant 2 à 4 atomes de carbone, m est tel que la masse moléculaire moyenne en nombre du polyether polyol (II) $HO-(R-O)_{\overline{m}}ROH$ soit compris entre 500 et 4000, et est caractérisée en ce qu'elle renferme en outre un condensat résultant de la réaction d'un oligoester de formule I avec un polyester insaturé.

Ce condensat peut plus précisément résulter de la réaction entre 170 et 220°, pendant une durée pouvant aller de 3 à 7 heures selon la nature des réactifs et la température choisie, d'un oligoester de formule I, présentant un indice d'acide en milieu aqueux et un indice d'acide en milieu alcoolique compris entre 25 et 100 et de préférence entre 40 et 70 et ces indices différant entre eux au maximum de 5, avec un polyester insaturé présentant un indice d'hydroxyle compris entre 20 et 80 et une masse moléculaire moyenne (en nombre) comprise entre 1000 et 5000. Ce polyester insaturé peut être utilisé seul ou, pour des raisons de facilité de mise en œuvre des réactifs, il peut être avantageusement utilisé sous forme de solution dans un monomère à insaturation éthylénique polymérisable, ladite solution pouvant renfermer 30 à 70% en poids de polyester insaturé.

Le condensat défini ci-avant, qui présente de préférence un indice d'acide compris entre 20 et 40 peut être mis en œuvre à raison de 0,5 à 5% du poids de la composition définie par ses constituants a, b et c.

Le polyester insaturé utilisé comme constituant a des compositions conformes à l'invention est avantageusement choisi parmi les polyesters dont l'indice d'acide en milieu alcoolique est compris entre 10 et 75 et plus précisément entre 15 et 40, l'indice d'hydroxyle est compris entre 20 et 80 et la masse moléculaire moyenne est comprise entre 1000 et 5000 (en nombre).

Le polyester utilisé comme constituant a et le polyester utilisé pour la préparation du condensat avec l'oligoester peuvent être choisis parmi les nombreux polymères résultant de la polycondensation d'au moins un dérivé polycarboxylique avec au moins un polyol, l'un au moins des réactifs possédant une double liaison carbone-carbone de nature éthylénique. L'expression dérivé polycarboxylique désigne les acides, les esters d'alcools inférieurs, les chlorures d'acides et les anhydrides. Lorsque l'on utilise plusieurs polyacides ou polyols il suffit que l'un des réactifs d'une famille, par exemple l'un des polyacides possède une double liaison éthylénique. A titre d'illustration des composés utilisables pour la préparation des polyesters, composés qui sont plus précisément bifonctionnels (diacides ou diols), on citera notamment comme acides les acides maléique, chloromaléique, bromomaléique, fumarique, chlorofumarique, bromofumarique, mesaconique, citraconique, itaconique, malonique, succinique, glutarique, sébacique, isophtalique, naphtalène dicarboxylique, cyclohexane dicarboxylique-1,4, endométhylène tétrahydrophtalique, endométhylène hexachlorophtalique; comme diols: éthylène glycol, propylène glycol, butylène glycol-1,2, diéthylène glycol, triéthylène glycol, tétraéthylène glycol, néopentylglycol, les polyméthylène glycols et notamment les tri-, tétra-, penta-, hexa-, hepta-et octaméthylène glycols. On peut évidemment utiliser une faible proportion de composé renfermant plus de deux groupements hydroxylés tels que le triméthylol-propane, le pentaérythritol.

Les conditions de préparation des polyesters insaturés sont abondamment décrites dans la littérature et ne constituent pas l'objet de l'invention. On peut se référer par exemple à l'ouvrage de Kirk Othmer — Encyclopedia of Chemical Technology.

A titre d'illustration de polyesters on mentionnera notamment les polyesters obtenus à partir d'un composant acide comprenant de l'anhydride maléique, seul ou en mélange avec l'acide isophtalique.

A titre d'illustration des monomères à insaturation éthylénique, on peut citer le styrène, l'alphaméthylstyrène, le vinyltoluène, la p.(alphaméthylvinyl)benzophénone, le divinylbenzène, l'oxyde de vinyle et de chloro-2 éthyle, la N-vinylpyrrolidone, la vinyl-2 pyridine, l'indène, l'acrylate de méthyle, le méthacrylate de méthyle, l'acrylamide, la N-t.butylacrylamide, l'acrylonitrile, l'hexahydrotriacrylo-1,3,5-s-triazine, le phtalate d'allyle, le fumarate d'allyle, le cyanurate d'allyle, le phosphate d'allyle, le diallylcarbonate de diéthylène glycol, le lactate d'allyle, le malonate d'allyle, le tricarballylate d'allyle, le trimésate d'allyle, le trimellate d'allyle.

Le monomère polymérisable représente généralement 10 à 60% du poids de l'ensemble polyester/monomère.

Le troisième constituant est l'oligoester de formule (I). Cet oligoester résulte de la réaction d'anhydride maléique avec un polyether polyol II. On donne la préférence aux oligoesters obtenus à partir de polyols de formule II, dont la masse moléculaire moyenne en nombre est comprise entre 1000 et 4000, lesdits oligoesters présentant un indice d'acide en milieu aqueux et un indice d'acide en milieu alcoolique compris entre 25 et 100 et de préférence entre 40 et 70, l'écart entre l'indice d'acide aqueux et l'indice d'acide alcoolique, pour un même oligoester, étant de préférence au maximum de 5.

Le polyether polyol est choisi de préférence parmi les polyéthylène glycols, polypropylène glycols, poly(oxyethylèneoxypropylène) glycols et polyoxytétramethylène glycols dont la masse moléculaire moyenne a été indiquée précédemment. La préparation de ces polyethers polyols est largement décrite dans la littérature et ne constitue pas un objet de l'invention.

D'une manière générale, on met en œuvre de 1,7 à 2 moles d'anhydride maléique par mole de polyol (II). La réaction est avantageusement effectuée entre 50 et 100°C et en présence d'un système catalytique tel que le carbonate de lithium, des composés de l'étain, tels que des sels ou oxydes ou des amines, et notamment des amines secondaires ou tertiaires.

De manière générale, on utilise de 0,02 à 2% en poids de catalyseur par rapport au poids de l'ensemble anhydride maléique/polyol.

L'oligoester de formule (I) est généralement utilisé à un taux pouvant atteindre 30% en poids par rapport au poids de l'ensemble polyester + monomère éthylénique. De préférence ce taux est compris entre 5 et 25%.

Les compositions conformes à l'invention peuvent être utilisées pour la préparation de compositions de moulage qui peuvent renfermer au moins l'un des additifs suivants: épaississant, charge, fibres de renforcement, catalyseur, inhibiteur de polymérisation ... De telles compositions de moulage constituent un autre objet de l'invention.

L'épaississant peut être avantageusement choisi parmi les oxydes ou hydroxydes de magnésium et de calcium et, plus généralement, parmi les oxydes et hydroxydes des composés des groupes I et II de la classification périodique des éléments.

La quantité du ou des épaississants peut représenter 0,05 à 3% du poids de l'ensemble polyester/monomère.

Les charges peuvent être choisies parmi les nombreux additifs de ce type. On mentionnera, à titre indicatif, l'argile, le talc, le carbonate de calcium, la silice, les microbilles de verre, le bioxyde de titane, le noir de carbone. La quantité de charge représente géneralement 5 à 70% du poids total de la composition.

Le matériau de renforcement est avantageusement constitué par des fibres de verre. On peut cependant utiliser d'autres fibres, associées ou non aux fibres de verre, telles que les fibres minérales (amiante), fibres métalliques, fibres de carbone, fibres naturelles (sisal, coton), fibres de polymères synthétiques (polyamides, polyesters). Lorsqu'elles sont incorporées dans les masses de moulage — en quantité pouvant représenter 5 à 70% du poids total de la composition —, les fibres présentent généralement une longueur de l'ordre de 5 à 20 mm. On peut également utiliser les compositions pour l'imprégnation de fibres, dont la longueur peut alors atteindre 50 mm, voire davantage.

Les compositions renferment généralement un catalyseur choisi parmi les composés générateurs de radicaux libres (composés peroxydés par exemple, tels que le peroxyde de benzoyle, le peroxyde de t-butyle, le peroxyde de lauroyle, le peroctoate de t-butyle).

On peut en outre utiliser un inhibiteur de Polymérisation — à raison d'environ 30 à environ 600 parties par million par rapport au poids de l'ensemble polyester + monomère + oligoester — (par exemple de l'hydroquinone, de la p.benzoquinone) et un agent de décollement du mole tel que les stéarates métalliques comme les stéarates de zinc, d'aluminium, de calcium.

Les compositions conformes à l'invention permettent de préparer des masses de moulage conduisant à des articles pratiquement exempt de retrait. Les pièces ainsi obtenues non seulement reproduisent parfaitement le profil ou relief du moule dans lequel elles ont été faites mais encore présentent d'excellentes qualités de surface.

Par ailleurs le condensat de l'oligoester avec le polyester insaturé aux compositions une remarquable stabilité dans le temps: ce condensat joue en effet un rôle très efficace pour compatibiliser les constituants de ces compositions et notamment le polyester, le monomère polymérisable et l'oligoester.

Les exemples suivants illustrent l'invention.

Exemples 1 et 2

A/Polyesters

a) On prépare un polyester à partir des produits suivants:

| | | |
|---|---|---|
| — | Anhydride maléique | 0,6 mole |
| — | Acide isophtalique | 0,4 mole |
| — | Diéthylène glycol | 0,35 mole |
| — | Propylène glycol | 0,70 mole |

Le polyester présente un indice d'acide de 20, un indice d'hydroxyle de 30 et une masse moléculaire moyenne en nombre de 2200.

Ce polyester est dissous dans le styrène (40 parties de styrène pour 60 parties de polyester). La solution obtenue (ci-après Résine 1) a une viscosité de 10 poises à 25°C.

b) On prépare un polyester à partir de:

- Anhydride maléique 1 mole
- Propylène glycol 1,1 mole

Le polyester présente un indice d'acide de 35, un acide d'hydroxyle de 58 et une masse moléculaire moyenne en nombre de 1200.

Ce polyester est dissous dans le styrène (40 parties de styrène pour 60 parties de polyester). La solution obtenue (ci-après Résine 2) a une viscosité de 8 poises à 25°C.

## B/Oligoester

A une mole de polyoxytétraméthylène glycol (masse moléculaire moyenne en nombre: 2000) préalablement fondu à 80°C on ajoute deux moles d'anhydride maléique. On effectue la réaction à 80°C pendant 8 heures en présence de 0,1% en poids de carbonate de lithium. Le produit obtenu recristallise lentement et présente un point de fusion de 34°C, un indice d'acide aqueux de 55 et un indice d'acide alcoolique de 52.

## C/Condensat

On chauffe à 180°C pendant 5 heures sous atmosphère d'azote 650 g de polyfumarate de propylène glycol (indice d'acide 24, indice d'hydroxyle 49, masse moléculaire moyenne en nombre 1500) et 150 g de l'oligoester décrit sous B. Le polyester est mis en œuvre sous forme de solution à 65% en poids dans le styrène. Le condensat présente un indice d'acide final de 30.

## D/Formulation

On prépare une série de compositions refermant:

- 5,5 g de stéarate de zinc,
- 1,15 g de peroctoate de t.butyle,
- 1,20 g de magnésie calcinée,
- 8,50 g de concentré coloré blanc,

ainsi que:

- 100 g de résine 1 ou 2,
- x g d'oligoester,
- y g de styrène supplémentaire,
- z g de carbonate de calcium,
- (100 + x + y) x 0,02 g de condensat décrit sous C.

L'oligoester est introduit à l'état fondu dans la résine 1 ou 2.

Les différents produits sont mélangés pendant 10 minutes sous vive agitation.

## E/Propriétés

### 1°/Stabilité des compositions

On observe une remarquable stabilité au stockage pendant plusieurs mois des formulations décrites sous D pour les valeurs suivantes des x, y et z:

$x = 10$ et $15$
$y = 0,5$, $18$ et $25$
$z = 0,85$, $150$ et $220$

Cette stabilité se caractérise par l'absence de séparation en deux couches des compositions, renfermant ou non des charges (z), l'une des couches étant riche en polyester, l'autre couche étant riche en oligoester, séparation qui peut s'observer lors du stockage prolongé de compositions ne renfermant pas le condensat.

2°/Retrait linéaire

A partir des compositions décrites au paragraphe précédent on imprègne des fibres de verre (diamètre moyen 14 microns, longueur moyenne 30 mm) disposées omnidirectionnellement sur un film de polyéthylène. On recouvre l'ensemble avec un second film de polyéthylène et le lait passer sous des rouleaux calandreurs pour éliminer les bulles d'air et améliorer l'imprégnation des fibres de verre.

Le matériau préimprégné renferme 28% en poids de verre pour un poids total de 6 $kg/m^2$.

On laisse reposer le matériau pendant 3 jours à 25°C. On effectue ensuite une mise sous presse (2 mm à 140°C).

On procède à une évaluation du retrait linéaire sur un disque de matière moulée de 150 mm de diamètre (différence entre le diamètre du moule et le diamètre de l'objet moulé, rapportée au diamètre du moule et exprimée en ‰).

On observe et constate que le retrait linéraire est de:

- 0,13‰ pour une composition renferment la résine 2, 15 g d'oligoester, 18 g de styrène supplémentaire et 220 g de charges (carbonate de calcium),
- 0,86‰ pour une composition identique à l'exception des charges (85 g au lieu de 220),
- 0,86‰ pour une composition renfermant la résine 1,85 g de charges et 15 g d'oligoester,
- 2,25‰ pour la même composition ne renferment pas d'oligoester.

**Revendications pour les Etats contractants: BE, CH, DE, GB, IT, LI, LU, NL, SE**

1. Composition durcissable à base de polyester comprenant:

a) un polyester non saturé
b) un monomère à insaturation éthylénique polymérisable
c) un oligoester de formule:

$$\left[ HO\overset{\overset{O}{\|}}{C}-CH=CH-\overset{\overset{O}{\|}}{C}-O \right]_x\!\!-\!\left(R-O\right)_{m}R-(OH)_y \qquad (I)$$

dans laquelle la valeur moyenne de x est comprise entre 1,5 et 2, y est égal à 2–x, R qui peut varier d'un motif à l'autre représente un radical aliphatique linéaire ou ramifié ayant 2 à 4 atomes de carbone, m est tel que la masse moléculaire moyenne en nombre du polyether polyol (II) $HO-(R-O)_m-ROH$ soit compris entre 500 et 4000, caractérisée en ce qu'elle renferme en outre un produit de condensation d'un oligoester de formule I avec un polyester insaturé.

2. Composition selon la revendication 1, caractérisée en ce que le condensat résulte de la réaction, à une température comprise entre 170 et 220° pendant une durée comprise entre 3 et 7 heures, d'un oligoester de formule I présentant un indice d'acide en milieu alcoolique compris entre 25 et 100, et de préférence entre 40 et 70, les deux indices différant entre eux au maximum de 5, avec un polyester insaturé présentant un indice d'hydroxyle compris entre 20 et 80, et une masse moléculaire moyenne en nombre comprise entre 1000 et 5000.

3. Composition selon l'une quelconque des revendications 1 et 2, caractérisée en ce que le condensat présente un indice d'acide compris entre 20 et 40.

4. Composition selon la revendication 1, caractérisée en ce que le produit de condensation de l'oligoester avec le polyester insaturé est utilisé en quantité représentant 0,5 à 5% en poids du mélange polyester insaturé + monomère polymérisable + oligoester.

5. Composition selon l'une quelconque des revendications 1 à 4, caractérisée en ce que le polyester insaturé présente un indice d'acide en milieu alcoolique compris entre 10 et 75, un indice d'hydroxyle compris entre 20 et 80 et une masse moléculaire en nombre comprise entre 1000 et 5000.

6. Composition selon l'une quelconque des revendications 1 à 5, caractérisée en ce que le monomère à insaturation éthylénique représente 10 à 60% du poids de l'ensemble polyester/monomère.

7. Composition selon l'une quelconque des revendications 1 à 6, caractérisée en ce que l'oligoester représente jusqu'à 30% du poids de l'ensemble polyester/monomère à insaturation éthylénique.

8. Composition selon la revendication 1, caractérisée en ce que l'oligoester de formule I résulte

de la réaction de 1,7 à 2 moles d'anhydride maléique avec une mole de polyéther polyol $HO-(R-O)_{\overline{m}}ROH$ dans laquelle R et m ont les significations données dans le revendication 1.

9. Composition selon la revendication 8, caractérisée en ce que la masse moléculaire moyenne en nombre du polyéther polyol $HO-(R-O)_{\overline{m}}ROH$ est comprise entre 1000 et 4000 et en ce que l'indice d'acide en milieu aqueux et l'indice d'acide en milieu alcoolique dudit oligoester sont compris entre 25 et 100 et de préférence entre 40 et 70, l'écart entre l'indice d'acide aqueux et l'indice d'acide alcoolique pour un même oligoester étant au maximum de 5.

10. Composition de moulage comprenant une composition selon l'une quelconque des revendications 1 à 9.

11. Composition selon la revendication 10, caractérisée en ce qu'elle renferme au moins un des additifs suivants: épaississant, charge, fibres de renforcement, catalyseur, inhibiteur de polymérisation.

**Revendications pour l'Etat contractant: AT**

1. Procédé de fabrication d'articles par durcissement d'une composition comprenant:

a) un polyester non saturé
b) un monomère à insaturation éthylénique polymérisable
c) un oligoester de formule:

$$\left[HO\overset{\overset{O}{\|}}{C}-CH=CH-\overset{\overset{O}{\|}}{C}-O\right]_x(R-O)_{\overline{m}}R-(OH)_y \qquad (I)$$

dans laquelle la valeur moyenne de x est comprise entre 1,5 et 2, y est égal à 2–x, R qui peut varier d'un motif à l'autre représente un radical aliphatique linéaire ou ramifié ayant 2 à 4 atomes de carbone, m est tel que la masse moléculaire moyenne en nombre du polyether polyol (II) $HO-(R-O)_{\overline{m}}ROH$ soit compris entre 500 et 4000, ledit procédé étant caractérisée en ce que la composition renferme en outre un produit de condensation d'un oligoester de formule I avec un polyester insaturé.

2. Procédé selon la revendication 1, caractérisé en ce que le condensat résulte de la réaction, à une température comprise entre 170 et 220° pendant une durée comprise entre 3 et 7 heures, d'un oligoester de formule I présentant un indice d'acide en milieu aqueux et un indice d'acide en milieu alcoolique compris entre 25 et 100, et de préférence entre 40 et 70, les deux indices différant entre eux au maximum de 5, avec un polyester insaturé présentant un indice d'hydroxyle compris entre 20 et 80, et une masse moléculaire moyenne en nombre comprise entre 1000 et 5000.

3. Procédé selon l'une quelconque des revendications 1 et 2, caractérisé en ce que le condensat présente un indice d'acide compris entre 20 et 40.

4. Procédé selon la revendication 1, caractérisé en ce que le produit de condensation de l'oligoester avec le polyester insaturé est utilisé en quantité représentant 0,5 à 5% en poids du mélange polyester insaturé + monomère polymérisable + oligoester.

5. Procédé selon l'une quelconque des revendications 1 à 4, caractérisé en ce que le polyester insaturé présente un indice d'acide en milieu alcoolique compris entre 10 et 75, un indice d'hydroxyle compris entre 20 et 80 et une masse moléculaire en nombre comprise entre 1000 et 5000.

6. Procédé selon l'une quelconque des revendications 1 à 5, caractérisé en ce que le monomère à insaturation éthylénique représente 10 à 60% du poids de l'ensemble polyester/monomère.

7. Procédé selon l'une quelconque des revendications 1 à 6, caractérisé en ce que l'oligoester représente jusqu'à 30% du poids de l'ensemble polyester/monomère à insaturation éthylénique.

8. Procédé selon la revendication 1, caractérisé en ce que l'oligoester de formule I résulte de la réaction de 1,7 à 2 moles d'anhydride maléique avec une mole de polyéther polyol $HO-(R-O)_{\overline{m}}ROH$ dans laquelle R et m ont les significations données dans le revendication 1.

9. Procédé selon la revendication 8, caractérisé en ce que la masse moléculaire moyenne en nombre du polyéther polyol $HO-(R-O)_{\overline{m}}ROH$ est comprise entre 1000 et 4000 et en ce que l'indice d'acide en milieu aqueux et l'indice d'acide en milieu alcoolique dudit oligoester sont compris entre 25 et 100 et de préférence entre 40 et 70, l'écart entre l'indice d'acide aqueux et l'indice d'acide alcoolique pour un même oligoester étant au maximum de 5.

## Patentansprüche

1. Aushärtbare Zuammensetzung auf Polyesterbasis, enthaltend:

a) einen ungesättigten Polyester
b) ein äthylenisch ungesättigtes polymerisierbares Monomer
c) einen Oligoester der Formel

$$\left[HO\overset{\overset{O}{\|}}{C}-CH=CH-\overset{\overset{O}{\|}}{C}-O\right]_x\!\!\!-\!\!(R-O)_{\overline{m}}R-(OH)_y \qquad (I)$$

in der der Mittelwert von x zwischen 1,5 und 2 liegt, y gleich 2–x ist, R, das von einer Grundeinheit zur anderen variieren kann, ein lineares oder vernetztes aliphatisches Radikal mit 2 bis 4 Kohlenstoffatomen repräsentiert, und m so ist, daß die durch das Zahlenmittel ausgedrückte Molekularmasse des Polyätherpolyols (II) HO $-\!(R-O)_{\overline{m}}$ ROH zwischen 500 und 4000 liegt, dadurch gekennzeichnet, daß sie überdies ein Produkt der Kondensation eines Oligoesters der Formel (I) mit einem ungesättigten Polyester enthält.

2. Zusammensetzung nach Anspruch 1, dadurch gekennzeichnet, daß das Kondensat resultiert aus der bei einer Temperatur zwischen 170 und 220° C während einer Zeitdauer zwischen 3 und 7 Stunden stattfindenden Reaktion eines Oligoesters der Formel I, der eine Säurezahl in wäßrigem Milieu und eine Säurezahl in alkoholischem Milieu zwischen 25 und 100, vorzugsweise zwischen 40 und 70 besitzt, wobei die beiden Säurezahlen unter sich um höchstens 5 differieren, mit einem ungesättigten Polyester, der eine Hydroxylzahl zwischen 20 und 80 und eine durch das Zahlenmittel ausgedrückte Molekularmasse zwischen 1000 und 5000 besitzt.

3. Zusammensetzung nach Anspruch 1 oder 2, dadurch gekennzeichnet, daß das Kondensat eine Säurezahl zwischen 20 und 40 besitzt.

4. Zusammensetzung nach Anspruch 1, dadurch gekennzeichnet, daß das Produkt der Kondensation des Oligoesters mit dem ungesättigten Polyester in einer 0,5 bis 5 Gew.-% der Mischung aus ungesättigtem Polyester, polymerisierbarem Monomer und Oligoester darstellenden Menge verwendet wird.

5. Zusammensetzung nach irgendeinem der Ansprüche 1 bis 4, dadurch gekennzeichnet, daß der ungesättigte Polyester eine Säurezahl in alkoholischem Milieu zwischen 10 und 75, eine Hydroxylzahl zwischen 20 und 80 und eine durch das Zahlenmittel ausgedrückte Molekularmasse zwischen 1000 und 5000 besitzt.

6. Zusammensetzung nach irgendeinem der Ansprüche 1 bis 5, dadurch gekennzeichnet, daß das äthylenisch ungesättigte Monomer 10 bis 60 Gew.-% des Systems Polyester/Monomer repräsentiert.

7. Zusammensetzung nach irgendeinem der Ansprüche 1 bis 6, dadurch gekennzeichnet, daß der Oligoester bis zu 30 Gew.-% des Systems Polyester/äthylenisch ungesättigtes Monomer repräsentiert.

8. Zusammensetzung nach Anspruch 1, dadurch gekennzeichnet, daß der Oligoester der Formel I aus der Reaktion von 1,7 bis 2 Mol Maleinsäureanhydrid mit 1 Mol Polyätherpolyol HO$-\!(R-O)_{\overline{m}}$ROH resultiert, wobei R und m die in Anspruch 1 angegebenen Bedeutungen haben.

9. Zusammensetzung nach Anspruch 8, dadurch gekennzeichnet, daß die durch das Zahlenmittel ausgedrückte Molekularmasse des Polyätherpolyols HO $-\!(R-O)_{\overline{m}}$ ROH zwischen 1000 und 4000 beträgt und daß die Säurezahl in wäßrigem Milieu und die Säurezahl in alkoholischem Milieu des genannten Oligoesters zwischen 25 und 100, vorzugsweise zwischen 40 und 70 liegen, wobei der Unterschied zwischen der Säurezahl in wäßrigem Milieu und der Säurezahl in alkoholischem Milieu für ein und denselben Oligoester höchstens 5 beträgt.

10. Preßmasse, enthaltend eine Zusammensetzung nach irgendeinem der Ansprüche 1 bis 9.

11. Masse nach Anspruch 10, dadurch gekennzeichnet, daß sie mindestens eines der folgenden Zusatzmittel enthält: Verdickungsmittel, Füllmittel, Verstärkungsfasern, Katalysator, Polymerisationsinhibitor.

## Patentansprüche für den Vertragsstaat: AT

1. Verfahren zur Herstellung von Artikeln durch Aushärten einer Zuammensetzung, enthaltend:

a) einen ungesättigten Polyester
b) ein äthylenisch ungesättigtes polymerisierbares Monomer
c) einen Oligoester der Formel

$$\left[HO\overset{\overset{O}{\|}}{C}-CH=CH-\overset{\overset{O}{\|}}{C}-O\right]_x\!\!\!-\!\!(R-O)_{\overline{m}}R-(OH)_y \qquad (I)$$

in der der Mittelwert von x zwischen 1,5 und 2 liegt, y gleich 2–x ist, R, das von einer Grundeinheit zur anderen variieren kann, ein lineares oder vernetztes aliphatisches Radikal mit 2 bis 4 Kohlenstoffatomen repräsentiert, und m so ist, daß die durch das Zahlenmittel ausgedrückte Molekularmasse des Polyätherpolyols (II) $HO\text{-}(R\text{–}O)_m ROH$ zwischen 500 und 4000 liegt, wobei das Verfahren dadurch gekennzeichnet ist, daß die Zusammensetzung überdies ein Produkt der Kondensation eines Oligoesters der Formel (I) mit einem ungesättigten Polyester enthält.

2. Verfahren nach Anspruch 1, dadurch gekennzeichnet, daß das Kondensat resultiert aus der bei einer Temperatur zwischen 170 und 220°C während einer Zeitdauer zwischen 3 und 7 Stunden stattfindenden Reaktion eines Oligoesters der Formel I, der eine Säurezahl in wäßrigem Milieu und eine Säurezahl in alkoholischem Milieu zwischen 25 und 100, vorzugsweise zwischen 40 und 70 besitzt, wobei die beiden Säurezahlen unter sich um höchstens 5 differieren, mit einem ungesättigten Polyester, der eine Hydroxylzahl zwischen 20 und 80 und eine durch das Zahlenmittel ausgedrückte Molekularmasse zwischen 1000 und 5000 besitzt.

3. Verfahren nach Anspruch 1 oder 2, dadurch gekennzeichnet, daß das Kondensat eine Säurezahl zwischen 20 und 40 besitzt.

4. Verfahren nach Anspruch 1, dadurch gekennzeichnet, daß das Produkt der Kondensation des Oligoesters mit dem ungesättigten Polyester in einer 0,5 bis 5 Gew.-% der Mischung aus ungesättigtem Polyester, polymerisierbarem Monomer und Oligoester darstellenden Menge verwendet wird.

5. Verfahren nach irgendeinem der Ansprüche 1 bis 4, dadurch gekennzeichnet, daß der ungesättigte Polyester eine Säurezahl in alkoholischem Milieu zwischen 10 und 75, eine Hydroxylzahl zwischen 20 und 80 und eine durch das Zahlenmittel ausgedrückte Molekularmasse zwischen 1000 und 5000 besitzt.

6. Verfahren nach irgendeinem der Ansprüche 1 bis 5, dadurch gekennzeichnet, daß das äthylenisch ungesättigte Monomer 10 bis 60 Gew.-% des Systems Polyester/Monomer repräsentiert.

7. Verfahren nach irgendeinem der Ansprüche 1 bis 6, dadurch gekennzeichnet, daß der Oligoester bis zu 30 Gew.-% des Systems Polyester/äthylenisch ungesättigtes Monomer repräsentiert.

8. Verfahren nach Anspruch 1, dadurch gekennzeichnet, daß der Oligoester der Formel I aus der Reaktion von 1,7 bis 2 Mol Maleinsäureanhydrid mit 1 Mol Polyätherpolyol $HO\text{-}(R\text{–}O)_m ROH$ resultiert, wobei R und m die in Anspruch 1 angegebenen Bedeutungen haben.

9. Verfahren nach Anspruch 8, dadurch gekennzeichnet, daß die durch das Zahlenmittel ausgedrückte Molekularmasse des Polyätherpolyols $HO\text{-}(R\text{–}O)_m ROH$ zwischen 1000 und 4000 beträgt und daß die Säurezahl in wäßrigem Milieu und die Säurezahl in alkoholischem Milieu des genannten Oligoesters zwischen 25 und 100, vorzugsweise zwischen 40 und 70 liegen, wobei der Unterschied zwischen der Säurezahl in wäßrigem Milieu und der Säurezahl in alkoholischem Milieu für ein und denselben Oligoester höchstens 5 beträgt.

## Claims

1. Hardenable compound with a polyester base comprising:

a. A non-saturated polyester;
b. A polymerisable ethylene non-saturation monomer;
c. An oligoester with the formula:

$$\left[HO\overset{\overset{O}{\|}}{C}-CH=CH-\overset{\overset{O}{\|}}{C}-O\right]_x(R-O)_m R-(OH)_y \qquad (I)$$

in which the mean value of x is between 1.5 and 2, y is equal to 2–x, R, which may vary for one reason or another, represents a linear or ramiform aliphatic radical having 2 to 4 carbon atoms, m is such that the numerical mean molecular mass of polyether polyol (II) $HO\text{-}(R\text{–}O)_m ROH$ is between 500 and 4000, characterised in that it also comprises an oligoester condensation product with formula I with an unsaturated polyester.

2. Compound according to claim 1, characterised in that the condensate is produced by the reaction, at a temperature of between 170 and 220° during a period of between 3 and 7 hours, of a formula I oligoester with having an acid value in an aqueous medium and an acid value in an alcohol medium of between 25 and 100, preferably between 40 and 70, the two values differing from one another to a maximum of 5, with an unsaturated polyester having an hydroxyl value between 20 and 80, and a numerical mean molecular mass of between 1000 and 5000.

3. Compound according to either one of claims 1 and 2, characterised in that the condensate has an acid value of between 20 and 40.

4. Compound according to claim 1, characterised in that the condensation product of the oligoester with the unsaturated polyester is used in a quantity having 0.5 to 5% by weight of unsaturated polyester + polymerisable monomer + oligoester mixture.

5. Compound according to any one of claims 1 to 4, characterised in that the unsaturated polyester has an acid value in alcohol medium of between 10 and 75, an hydroxyl value of between 20 and 80 and a numerical molecular mass between 1000 and 5000.

6. Compound according to any one of claims 1 to 5, characterised in that the ethylene non-saturation monomer has 10 to 60% of the overall weight of the polyester/monomer.

7. Compound according to any one of claims 1 to 6, characterised in that the oligoester has up to 30% of the overall weight of the polyester/ethylene non-saturation monomer.

8. Compound according to claim 1, characterised in that the formula I oligoester is produced by the reaction of 1.7 to 2 moles maleic anhydride with one mole of polyether polyol $HO-(R-O)_{m}-ROH$ in which R and m have the values given in claim 1.

9. Compound according to claim 8, characterised in that the numerical mean molecular mass of the polyether polyol $HO-(R-O)_{m}-ROH$ is between 1000 and 4000 and in that the acid value in aqueous medium and the acid value in alcohol medium of the said oligoester are between 25 and 100 and preferably between 40 and 70, the difference between the aqueous acid value and the alcohol acid value for the same oligoester being a maximum of 5.

10. Moulding compound comprising a compound according to any one of claims 1 to 9.

11. Compound according to claim 10, characterised in that it comprises at least one of the following additives: thickener, filler material, reinforcement fibres, catalyst, polymerisation inhibitor.

**Claims for the Contracting state: AT**

1. Process of manufacture of hardenable compound with a polyester base comprising:

a. A non-saturated polyester;
b. A polymerisable ethylene non-saturation monomer;
c. An oligoester with the formula:

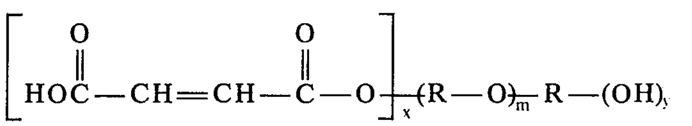

(I)

in which the mean value of x is between 1.5 and 2, y is equal to 2–x, R, which may vary for one reason or another, represents a linear or ramiform aliphatic radical having 2 to 4 carbon atoms, m is such that the numerical mean molecular mass of polyether polyol (II) $HO-(R-O)_{m}-ROH$ is between 500 and 4000, characterised in that it also comprises an oligoester condensation product with formula I with an unsaturated polyester.

2. Process according to claim 1, characterised in that the condensate is produced by the reaction, at a temperature of between 170 and 220° during a period of between 3 and 7 hours, of a formula I oligoester with having an acid value in an aqueous medium and an acid value in an alcohol medium of between 25 and 100, preferably between 40 and 70, the two values differing from one another to a maximum of 5, with an unsaturated polyester having an hydroxyl value between 20 and 80, and a numerical mean molecular mass of between 1000 and 5000.

3. Process according to either one of claims 1 and 2, characterised in that the condensate has an acid value of between 20 and 40.

4. Process according to claim 1, characterised in that the condensation product of the oligoester with the unsaturated polyester is used in a quantity having 0.5 to 5% by weight of unsaturated polyester + polymerisable monomer + oligoester mixture.

5. Process according to any one of claims 1 to 4, characterised in that the unsaturated polyester has an acid value in alcohol medium of between 10 and 75, an hydroxyl value of between 20 and 80 and a numerical molecular mass between 1000 and 5000.

6. Process according to any one of claims 1 to 5, characterised in that the ethylene non-saturation monomer has 10 to 60% of the overall weight of the polyester/monomer.

7. Process according to any one of claims 1 to 6, characterised in that the oligoester has up to 30% of the overall weight of the polyester/ethylene non-saturation monomer.

8. Process according to claim 1, characterised in that the formula I oligoester is produced by the reaction of 1.7 to 2 moles maleic anhydride with one mole of polyether polyol $HO-(R-O)_{m}-ROH$ in which R and m have the values given in claim 1.

9. Process according to claim 8, characterised in that the numerical mean molecular mass of the

polyether polyol $HO-(R-O)_{\overline{m}}-ROH$ is between 1000 and 4000 and in that the acid value in aqueous medium and the acid value in alcohol medium of the said oligoester are between 25 and 100 and preferably between 40 and 70, the difference between the aqueous acid value and the alcohol acid value for the same oligoester being a maximum of 5.